# EUROPEAN PATENT APPLICATION

(11) **EP 3 971 520 A1**
(43) Date of publication of application: **23.03.2022**
(21) Application number: 19929155.0
(22) Date of filing: 13.06.2019
(51) Int. Cl.: G01C 11/00

(54) **COMMODITY INFORMATION COLLECTION DEVICE**

(30) Priority: 16.05.2019 CN 201910407349
(71) Applicant: Shanghai Zhuiyue Science and Technology Co., Ltd., Shanghai 200126 (CN)
(72) Inventor: FENG, Linan, Shanghai 200126 (CN); MA, Jieyu, Shanghai 200126 (CN); XIA, Ding, Shanghai 200126 (CN); LI, Tingtao, Shanghai 200126 (CN); WU, Wenyao, Shanghai 200126 (CN); ZHANG, Yimei, Shanghai 200126 (CN)
(74) Representative: Abel & Imray LLP
(86) International application number: PCT/CN2019/091131
(87) International publication number: WO 2020/228089

(57) **Abstract**

The disclosure is provided a goods information collection device, including a box, a carrier plate, an image capturing unit, a storage unit, and a data processing unit. The carrier plate is arranged on the inner bottom surface of the box for to place goods; the image acquisition unit is used to collect at least one image of the goods, the image includes pictures and/or videos; the storage unit is used to store the images of the goods; and the data processing units are respectively connected to the image capturing unit and the storage unit.

## Description

### FIELD

The disclosure relates to a technical field used in the retail industry, particularly, a goods information collection device.

### BACKGROUND

In the unmanned supermarket project, computer vision technology can identify the types of goods based on the external visual effects of the goods. In the application of computer vision technology, the computer needs to collect a large number of photos of each type of goods in advance, and use a large number of photos as samples to build a goods identification model to acquire the appearance information of each product, such as shape, pattern, color, size, etc. In theory, the more photos entered into the database during modeling, the higher the accuracy of goods identification after modeling. Generally speaking, each goods needs thousands or even tens of thousands photos taken from different angles and/or different directions before entering the unmanned supermarket for sale. If one uses a traditional camera or camera to collect photos, it is time-consuming and laborious, and the speed is very slow. The photographing process of each goods generally lasts 30-60 minutes, and the error rate is high.

Before the goods are sold in the unmanned supermarket, besides the image data (e.g., photos), the computer also collects the weight, model, product number and other information of the goods. There are many types of data to be collected, the collection process is complicated, the efficiency is low, and the workload is large.

### SUMMARY

The purpose of the present disclosure is to provide a goods information collection device, which can solve the technical problems of manual collection of product information in the prior art, such as time-consuming, slow speed, high labor cost, and high error rate.

According to a first aspect of the disclosure, there is provided a goods information collection device, including a box, a carrier plate, an image capturing unit, a storage unit, and a data processing unit. The carrier plate is arranged on an inner bottom surface of the box for placing goods; the image capturing unit is used to collect at least one image of the goods, the image including a pictures and/or a video; the storage unit is used to store the images of the goods; and the data processing unit is connected to the image capturing unit and the storage unit, respectively.

Further, the image capturing unit includes a first camera unit and/or a second camera unit. The first camera unit includes a first lens facing the goods on the carrier plate; the first camera unit is arranged on an inner side wall of the box; and/or, the second camera unit includes a second lens facing the goods on the carrier plate; the second camera unit is provided on an inner top surface of the box; wherein, the first camera unit and/or the second camera unit are electrically connected to the data processing unit.

The disclosure provides a goods information collection device, in which the relative angle of view and relative direction between the camera and the goods can be automatically adjusted during the shooting process, and the goods information collection device can capture a large number of photos of the same goods in different angles and directions in a short time, which greatly improves the shooting efficiency and effectively saves labor and time costs.

### BRIEF DESCRIPTION OF THE DRAWINGS

FIG. 1 is a schematic diagram of the external structure of the goods information collection device according to example 1 of the disclosure;
FIG. 2 is a schematic diagram of the structure of the box plate according to example 1 of the disclosure;
FIG. 3 is a schematic diagram of the internal structure of the goods information collection device according to example 1 of the disclosure;
FIG. 4 is a schematic diagram of an exploded structure of the first rotating device according to example 1 of the disclosure;
FIG. 5 is a schematic diagram of the structure of the first rotating device according to example 1 of the disclosure;
FIG. 6 is a block diagram of functional modules of the data processing unit according to example 1 of the disclosure;
FIG. 7 is a block diagram of the circuit structure of the goods information collection device according to example 1 of the disclosure;
FIG. 8 is a schematic diagram of the internal structure of the goods information collection device according to example 2 of the disclosure;
FIG. 9 is a schematic diagram of an exploded structure of the bottom plate of the goods information collection device according to example 2 of the disclosure;
FIG. 10 is a schematic cross-sectional structure diagram of the weighing device according to example 2 of the disclosure;
FIG. 11 is a block diagram of the circuit structure of the goods information collection device according to example 2 of the disclosure;
FIG. 12 is a schematic diagram of the internal structure of the goods information collection device according to example 3 of the disclosure;
FIG. 13 is a schematic diagram of the structure of the translation device according to example 2 of the disclosure;
FIG. 14 is a schematic diagram of the structure of the lifting device according to example 3 of the disclosure;
FIG. 15 is a block diagram of the circuit structure of the goods information collection device according to example 3 of the disclosure;
FIG. 16 is a schematic diagram of the structure of the goods information collection device according to example 4 of the disclosure;
FIG. 17 is a schematic diagram of the structure of the goods information collection device from another perspective according to example 4 of the disclosure;
FIG. 18 is a schematic diagram of an exploded structure of the second rotating device according to example 4 of the disclosure;
FIG. 19 is a block diagram of the circuit structure of the goods information collection device according to example 4 of the disclosure.

The reference numerals for each component in the drawings are as follows.
1 box; 2 carrier plate; 3 light source; 4 electrical warehouse; 5 storage unit; 6 data processing unit;
7 server; 8 scanning device; 9 display device; 10 alarm device;
11 weighing device; 12 raspberry pi; 13 control panel; 14 translation device; 15 lifting device;
21 first rotating device; 22 second rotating device;
101 box plate; 102 transparent window; 103 box base plate;
211 first rotating wheel; 212 first motor; 213 first circular conveyor belt; 214 first bearing;
221 second rotating wheel; 222 second motor; 223 second circular conveyor belt; 224 second bearing;
225 rotating plate; 226 bracket;
301 first camera unit; 302 second camera unit;
401 cover plate; 402 printed circuit board; 403 power supply device;
601 distance parameter input unit; 602 goods image acquisition unit;
603 image size acquisition unit; 604 goods size calculation unit;
141 first sliding rail; 142 first sliding block; 143 first telescopic rod;
151 second sliding rail; 152 second sliding block; 153 second telescopic rod;
1011 plate/board body; 1012 buckle; 1013 bayonet;
1101 weighing plate; 1102 weight sensor.

### DETAILED DESCRIPTION

Examples of the disclosure will be described in detail below with reference to the accompanying drawings, so that the technical contents thereof will be clear and understood. The disclosure may be embodied in many different forms and should not be construed as limited to the examples set forth herein.

In the drawings, elements having the same structure are denoted by the same reference numerals, and elements having similar structures or functions are denoted by similar reference numerals. The directional terms, such as upper, lower, front, rear, left, right, inner, outer, upper surface, lower surface, side surface, top, bottom, front, rear, end, etc., used in the disclosure are only used for explanation and illustration, and are not intended to limit the scope of the disclosure.

When an element is referred to as being "on" another element, it can be directly on the other element; there may also be an intermediate element, the element being disposed on the intermediate element and the intermediate element being disposed on the other element. When an element is referred to as being "mounted to" or "connected to" another element, it is to be understood that the element is directly "mounted to" or "connected to" the other element or that the element is indirectly "mounted to" or "connected to" the other element through an intermediate element.

### Example 1

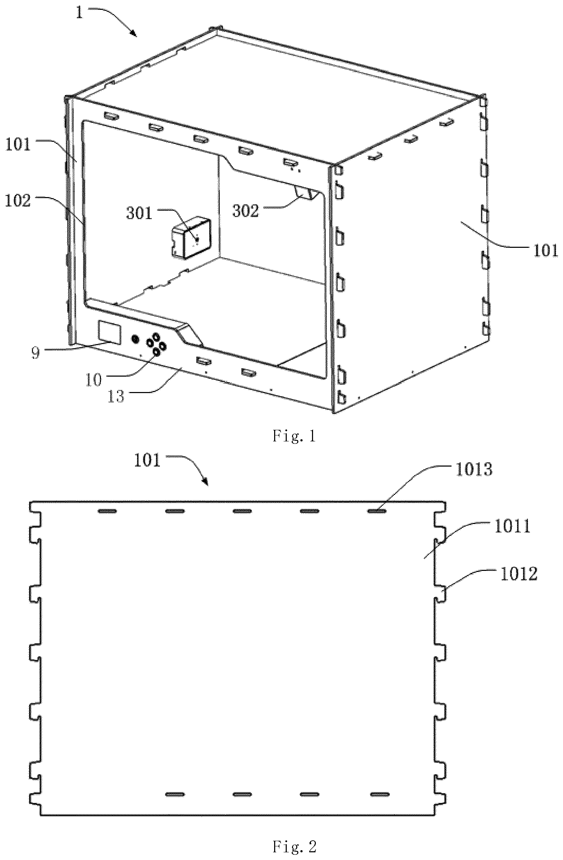

The example of the disclosure relates to a goods information collection device. Referring to FIG. 1, the goods information collection device includes a box 1, which is a closed rectangular parallelepiped box surrounded by six box plates 101. Among them, any box plate 101 is detachably connected to other four box plates. In other examples, the box 1 may also be a cube or a cylinder.

Referring to FIG. 2, the box plate 101 includes a plate/board body 1011. A protruding buckle 1012 and a bayonet 1013 are provided at the edge of the plate/board body 1011, and the bayonet 1013 penetrates the plate/board body 1011 at the edge. The buckle of any one of the box plates can be detachably snapped into the bayonet of another box plate, so that the box 1 is easy to disassemble and convenient to carry or transport.

The box 1 may also include a brown transparent window 102 embedded in a box plate 101 of the box 1, so that the user can observe the working state of the box from the outside of the box 1.

In other examples, a certain box plate of the box 1 may further include a box door (not shown in the figure), and the user can put goods into the box 1 or take it out of the box 1 through the box door without removing the box plate.

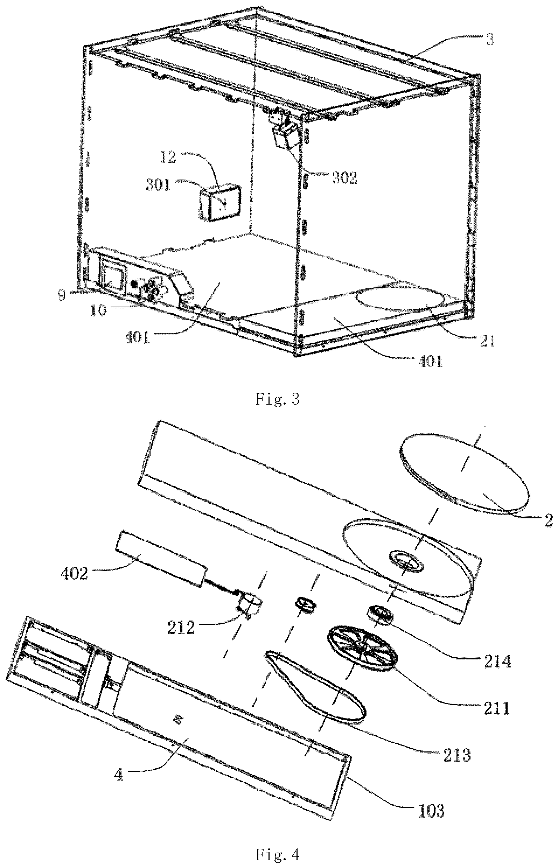

Referring to FIGS. 3 to 4, in this example, the box plate located on the bottom surface of the rectangular parallelepiped box 1 is the box base plate 103. The inner bottom surface of the box 1, that is, the upper surface of the box base plate 103 is provided with a first rotating device 21. The first rotating device 21 includes a first rotating wheel 211, a first motor 212 and a first circular conveyor belt 213. The first rotating wheel 211 is rotatably mounted to the inner bottom surface of the box through a first bearing 214. The first motor 212 is fixed to the inner bottom surface of the box. The first motor 212 includes a rotor (not shown in figures), and the central axis of the rotor is parallel to the central axis of the first rotating wheel 211. The first circular conveyor belt 213 is tightly sleeved on the outer side wall of the first rotating wheel 211 and the rotor, and the inner side wall of the first circular conveyor belt 213 is tangent to the outer side wall of the first rotating wheel 211 and the outer side wall of the rotor.

Referring to FIGS. 3 to 5, the example also includes a carrier plate 2 which is horizontally arranged on the top of the first rotating device 21 for placing goods. When the first motor 212 is started, the rotor of the first motor 212 drives the first circular conveyor belt 213 to rotate clockwise, and under the traction of the first circular conveyor belt 213, the first rotating wheel 211 also rotates clockwise. At this time, the first bearing 214 of the first rotating wheel 211 drives the first carrier plate 2 to rotate, thereby causing the goods on the first carrier plate 2 to rotate.

Referring to FIG. 3, a light source 3 is provided on the inner top surface of the box 1 to illuminate the inside of box 1. The light source 3 can be an LED lamp, a ball lamp, an incandescent lamp, etc., which makes the light of the box uniform.

Referring to FIG. 3, an image capturing unit is located in the box 1, and is used to collect at least one image of the goods. The image can be either a picture or a photo, or a video. The image capturing unit includes at least one camera unit. In this example, the image capturing unit includes a first camera unit 301 and a second camera unit 302.

The first camera unit 301 is arranged on the inner side wall of the box 1. The first camera unit 301 includes a first lens and an imaging plate (not shown in figures). The first lens faces the goods on the carrier plate 2. The central axis of the first lens is perpendicular to the imaging plate, and the goods are photographed after receiving instructions. Preferably, the height of the first lens is the same as the height of the middle part of the goods placed on the carrier plate 2, and the angle between the central axis of the first lens and the central axis of the carrier plate 2 is 90 degrees. When the carrier plate 2 drives the goods to rotate, the first camera unit 301 can capture image data of goods from various angles and on multiple sides in the horizontal direction, the image data including pictures and/or videos.

Referring to FIG. 4, the second camera unit 302 is fixed to the top surface inside the box 1, and it is close to a corner where the top and two sides meet. The second camera unit 302 includes a second lens which faces the goods on the carrier plate 2. The angle between the central axis of the second lens and the central axis of the object carrier 2 is 20 to 70 degrees, and the second lens can be set to have an adjustable angle, so that the second lens is always aimed at the goods on the carrier plate 2 during the shooting process, and the goods are photographed after receiving the instruction. When the carrier plate 2 drives the goods to rotate, the second camera unit 302 can capture images of the goods from the above and capture image data of goods from various angles and on multiple sides, the image data including pictures and/or videos.

Referring to FIGS. 3 to 4, a cover plate 401 is provided at the bottom of the box 1, which is parallel to the box base plate 103. The cover plate 401 and the box base plate 103 enclose an electrical warehouse 4 for placing the first rotating device 21, a printed circuit board 402 and the power supply device (not shown in figures). The internal height of electrical warehouse 4 is the same as or similar to the height of the carrier plate 2, which will not affect the photographing process of the goods on the carrier plate 2 by the first camera unit 301. For ease to install, preferably the cover plate 401 and the box base plate 103 can be divided into two parts, and the electrical warehouse 4 can also be divided into two parts, namely a first warehouse 41 and a second warehouse 42. The first warehouse 41 is used to place the first rotating device 21, and the second warehouse 42 is used to place the printed circuit board 402 and the power supply device (not shown in figures). The printed circuit board 402 is connected to a data processing unit through at least one data line. The power supply device can be a power adapter coupled to an external alternating current, or a battery pack, which provides power to the data processing unit and the printed circuit board (PCB).

During use of this example, the user mounts the box plates 101, places the goods to be photographed on the carrier plate 2, and starts photographing the goods. When the image capture device receives a photographing instruction, since the image capture device has a self-aligning function, the first lens and the second lens face the carrier plate 2 respectively, and the motor 212 of the first rotating device 21 is activated, so that the carrier plate 2 drives the goods to slowly rotate. The first camera unit 301 and the second camera unit 302 obtain pictures or videos of the goods at a speed of 10-60 frames per second, preferably a speed of 20 or 24 or 25 or 30 frames per second, and obtain thousands or tens of thousands of images of the side or top of the goods at different angles, in order to serve as samples for building a computer vision model.

The goods applicable to this example are generally standard goods. The appearance and size of the same type of goods are the same or similar. Only one product in the same type of goods needs to be photographed to complete the picture sampling of that type of goods. The first rotating device 21 must drive the goods to rotate for at least one revolution, and so that the first camera unit 301 and the second camera unit 302 can obtain images of the goods from various angles and directions. It takes 3 to 90 seconds for the first rotating device 21 to rotate one revolution at a uniform speed. If it takes 60 seconds for the first rotating device 21 to rotate one revolution at a uniform speed, the first camera unit 301 and the second camera unit 302 obtain pictures of goods at a rate of 30 frames per second, and the goods information collection device can collect 1800 pictures of goods per minute.

The goods information collection device also including a storage unit 5 and a data processing unit 6. In this example, a Raspberry Pi 12 is preferred, with an SD card or MicroSD card as the storage unit 5, and an ARM processor as the data processing unit 6. Referring to FIG. 3, in this example, the Raspberry Pi 12 is fixed to the side wall of box 1, and is installed in the same housing as the first camera unit 301. Various interfaces (such as network cable interface, USB interface) of Raspberry Pi 12 are located on the side wall of the box 1, and are exposed outside the box. In other examples, the Raspberry Pi 12 also can be installed in electrical warehouse 4, and the first camera unit 301 is fixedly or movably installed on the side wall of the box 1.

The first camera unit 301 and the second camera unit 302 are electrically coupled to the data processing unit 6, and the photos taken are transmitted to the Raspberry Pi 12 in real time and stored in the storage unit 5. When necessary, the data processing unit 6 may carry out a preliminary screening and delete lower-resolution photos.

The storage unit 5 of the Raspberry Pi 12 stores therein a large number of computer-executable instructions for executing a method for determining the size of a type of goods, and the size of the goods can be calculated according to the size of the image of the goods. The method for determining the size of the goods includes the following steps: step S1) distance parameter input step, recording the horizontal distance between the first lens and the front end of the goods, and recording the distance between the first lens and the imaging plate; step S2) goods image acquisition step, obtaining the image of the goods formed on the imaging plate; step S3) image size acquisition step, obtaining the size of the image of the goods; step S4) goods size calculation step, calculating the size of the goods according to the size of the goods image, the distance between the first lens and the front end of the goods, and the distance between the first lens and the imaging plate.

The data processing unit 6 of the Raspberry Pi 12 includes a plurality of execution units, which are respectively used to execute each computer executable instruction, and each instruction executes a step of the method for determining the size of the goods.

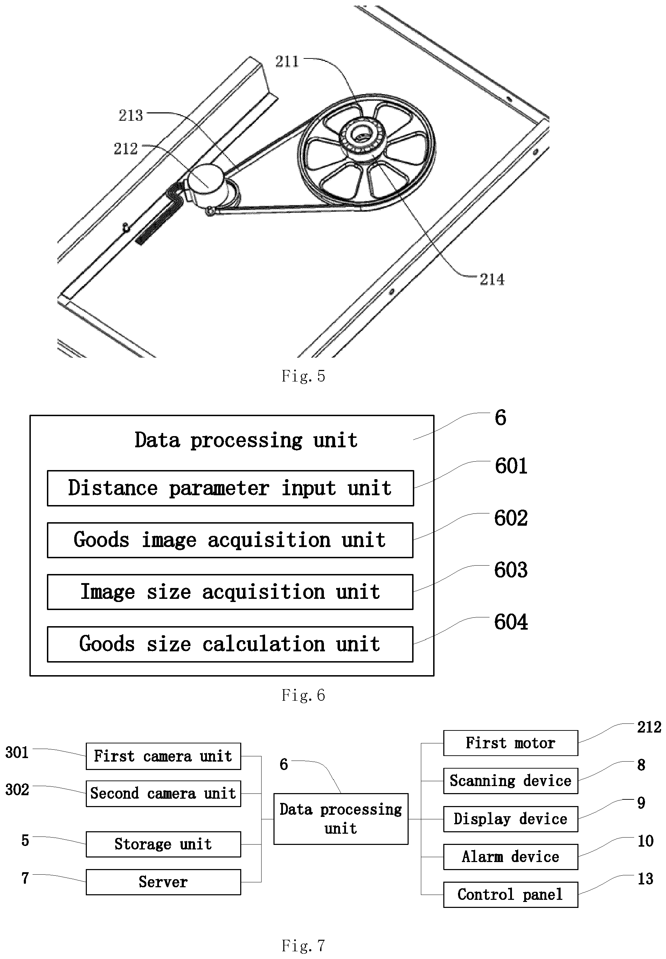

Referring to FIG. 6, the execution unit of the data processing unit 6 includes a distance parameter input unit 601, a goods image acquisition unit 602, an image size acquisition unit 603, and a goods size calculation unit 604. The data processing unit 6 can calculate the size of the product according to the size of the image of the goods, and obtain size information such as the length, width, and height of the goods.

The distance parameter input unit 601 is used to input the horizontal distance between the first lens and the front end of the goods and the distance between the first lens and the imaging plate. The goods image acquisition unit 602 is used for acquiring the goods image formed on the imaging plate of the goods. The image size acquisition unit 603 is used to obtain the size of the image of the goods. The goods size calculation unit 604 is configured to calculate the size of the goods according to the size of the goods image, the distance between the first lens and the front end of the goods, and the distance between the first lens and the imaging plate.

The carrier plate 2 is provided with a mark. When placing the goods, the user can place the goods on the mark of the carrier plate 2 so that the front end of the goods corresponds to the mark. The center point of the mark is on the same horizontal plane as the center point of the first lens, that is the horizontal distance between the first lens and the front end of the goods, which can be pre-measured or preset. The distance between the first lens and the imaging plate is a camera parameter of the first camera unit 301, which is known. The horizontal distance between the first lens and the front end of the goods, and the distance between the first lens and the imaging plate can be set during the debugging of the device and input into the Raspberry Pi.

When the goods are rotated horizontally by a certain angle, the first camera unit 301 can take photos of the goods at different angles, and the goods size calculation unit 604 can calculate the size of the goods according to the principle of optical imaging, including the length, width and height of the goods. Referring to FIG. 7, in this example, if the distance from the first lens to the front end of the goods is D, the focal length of the first lens is f, and the imaging height of the goods is h, according to the principle of optical imaging, the true height of the goods is H=h^{∗}D/f. Since the goods can be rotated, the goods size calculation unit 604 can further calculate the length and width of the goods. Referring to FIG. 7, the example also includes a server 7, a scanning device 8, a display device 9, an alarm device 10, and a control panel 13, which are respectively coupled to the data processing unit 6.

The server 7 is located outside the goods information collection device and is coupled to the data processing unit 6 in a wired or wireless manner. Due to the limited storage space of the Raspberry Pi 12, the images and/or sizes of the goods can also be sent to the server 7 to generate and update the goods database in the server, and record the image, size and other goods information of the goods. The surface of the goods or its packaging is provided with an identifiable code, such as a barcode, a QR code, etc. The identifiable code stores goods information, including the category, model, product number, serial number, price, and place of origin.

The scanning device 8 is arranged outside the goods information collection device, and is coupled to the data processing unit 6 in a wired or wireless manner to scan the code of the product, and then identify the goods information, such as product category, model, and price, etc. The above-mentioned goods information can be transmitted to the server 7 to further improve the goods information in the product database.

The display device 9 is arranged outside the goods information collection device, preferably on the outer side wall of the box 1, to display the goods information and/or photographing progress, photographing time and other work information. The alarm device 10 is a speaker, which is arranged on the outer side wall of the box 1 or the circuit board of the Raspberry Pi 12. After the image information of the goods is collected, the motor 212 is automatically turned off, and the first camera unit 301 and the second camera unit 302 automatically stop taking pictures. The alarm device emits an alarm sound to prompt the user that the information collection of the goods is completed, and prompt the user to take the goods out or collect information on the next goods.

The control panel 13 is arranged on the outer side wall of the box 1 for inputting user's control instructions. Both the display device 9 and the alarm device 10 can be arranged on the control panel 13. The goods information collection device obtains the control instructions input by the user, and it can control the power supply to supply power to or cut off the power from each electrical component, and control the motor 212, the first camera unit 301, and the second camera unit 302 of the first rotating device 21 to start or stop operations .

In the process of using this example, the user first assembles the box 1, uses the scanner 8 to obtain the barcode information of the goods, records the information of the goods, and then sends the goods through the box door into the box and places them on the carrier plate 2. The user closes the box door, sets the shooting time (such as two minutes), and starts the first rotating device 21 to drive the carrier plate 2 to rotate. The first camera unit 301 and the second camera unit 302 collect the image information of the goods at high speed, and then transfer to the server 7.

The beneficial effect of this example is to provide a goods information collection device that can quickly take photos when the goods are automatically rotated, and obtain a large number of photos of the same goods from different angles in a short time, so as to provide enough picture samples for building a computer vision model. It effectively saves manpower and material resources, and improves the shooting efficiency of the goods. At the same time, the goods information collection device can also be used to collect other goods information such as the type, model, and price of the goods.

### Example 2

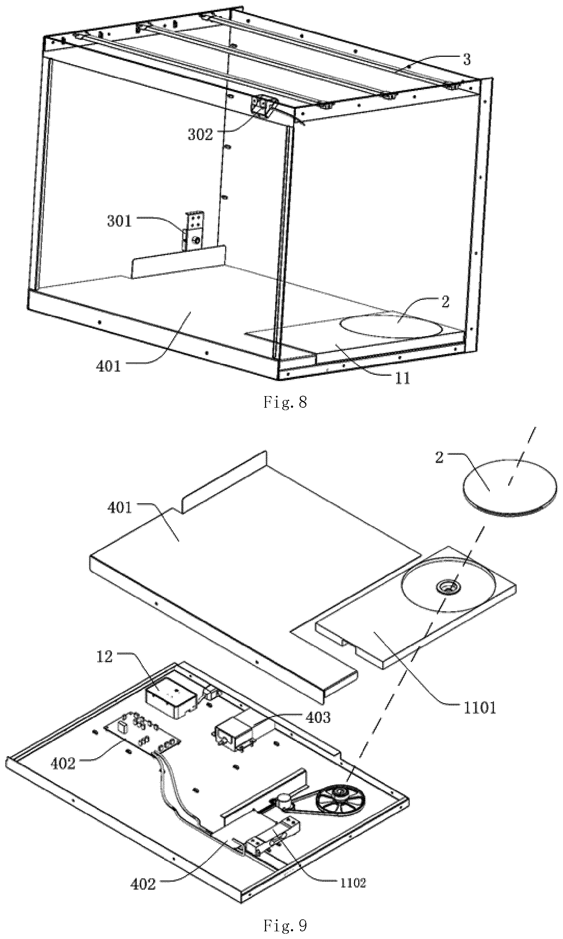

Referring to FIGS. 8 to 11, example 2 provides a goods information collection device, including all the technical solutions of example 1. The difference between the two is that example 2 also includes a weighing device 11, which includes a weighing plate 1101 and weight sensor 1102.

The weighing plate 1101 is a part of the cover plate 401 and is on the same plane as the carrier plate 2. The weighing plate 1101 is arranged on the inner bottom surface of the box 1 for placing goods. The lower surface of one end of the weight sensor 1102 is connected to the inner bottom surface of the box 1, that is, the box base plate 103, and the upper surface of the other end is connected to the lower surface of the weighing plate 1101. The weight sensor 1102 is coupled to the data processing unit 6, and the weight sensor 1102 measures the weight data of the goods and transmits the weight data to the data processing unit 6.

Another difference between the example 2 and example 1 is that, in the example 2, the raspberry pi 12 is also installed in the electrical warehouse 4, and the first camera unit 301 is fixedly installed on the side wall of the box 1.

In the process of using this example, the user first assembles the box, uses the scanning device 8 to obtain the barcode information of the goods, records the information of the goods, and then sends the goods through the box door into the box and places them on the weighing board. The weight sensor collects the weight data of the goods, and the data processing unit 6 can record the weight value of each goods according to this, and send it to the server 7 for storage in the goods database.

Then, the user transfers the goods to the carrier plate 2, closes the door, sets the shooting time (such as two minutes), and activates the first rotating device 21 to drive the carrier plate 2 to rotate. The first camera unit 301 and the second camera unit 302 collect the image information of the goods at high speed and transmit it to the server 7.

The beneficial effect of this example is to provide a goods information collection device that in addition to obtaining a large number of photos of the same goods from different angles in a short time, can also obtain goods information such as weight data of the goods.

### Example 3

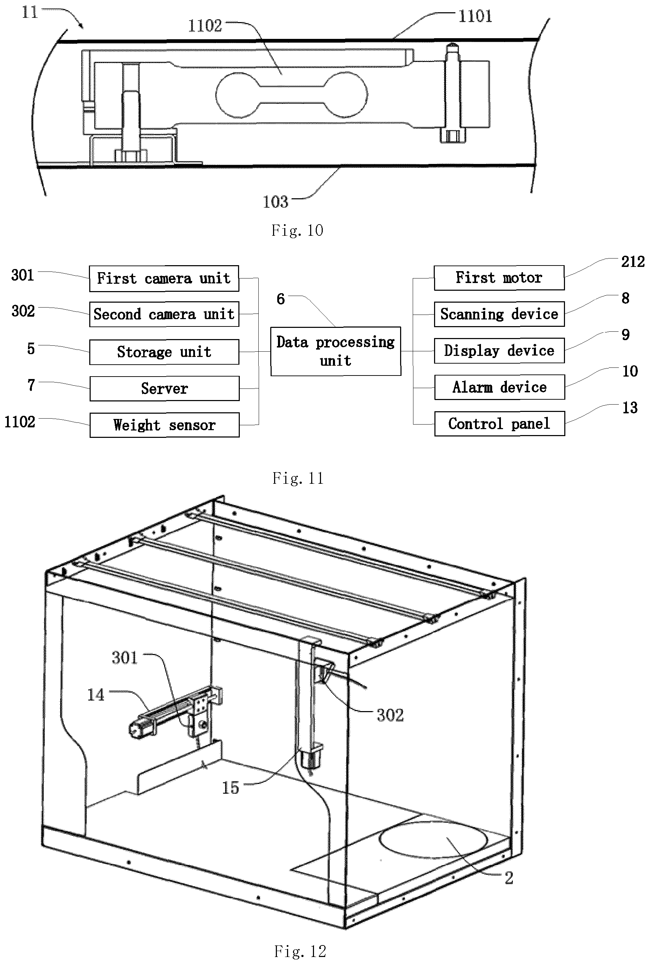

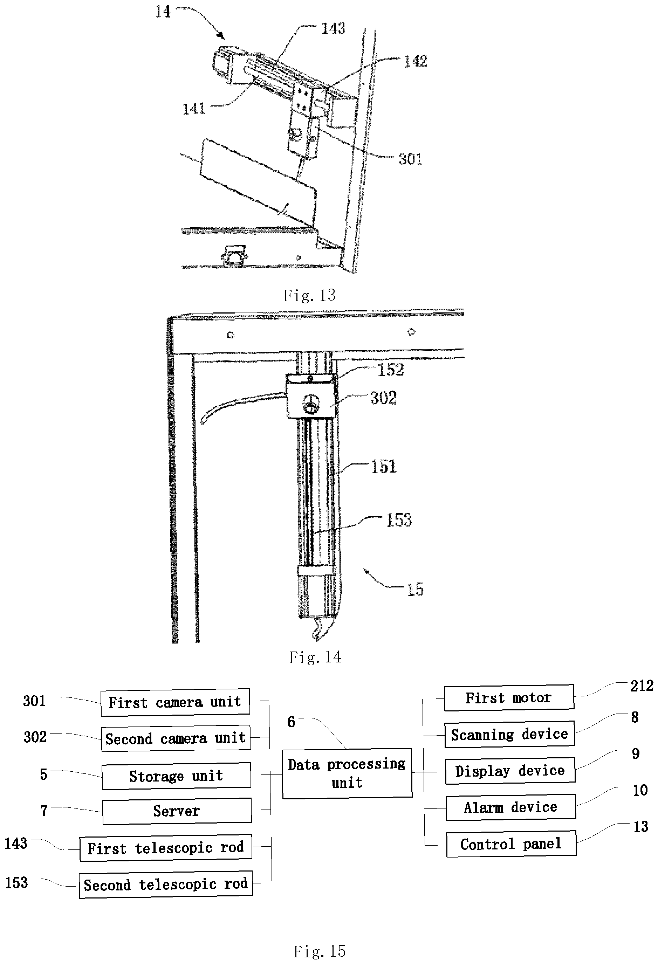

Referring to FIGS. 12 to 15, this example provides a goods information collection device, which includes all the technical features of example 1, and also includes a translation device 14 and a lifting device 15, which are all arranged on the inner side wall of the box 1. In this example, the first camera unit 301 is installed on the translation device 14, and the second camera unit 302 is installed on the lifting device 15; and the lifting device 15 is arranged on the upper part of an inner side wall of the box 1. In other examples, the first camera unit 301 may also be installed on the lifting device 15, and the second camera unit 302 may be installed on the translation device 14; at the same time, the lifting device 15 is arranged on the upper part of the inner side wall of the box 1.

The translation device 14 includes a first sliding rail 141, a first sliding block 142 and a first telescopic rod 143. The first sliding rail 141 is horizontally arranged on an inner side wall of the box 1. The first sliding block 142 is slidably mounted to the first sliding rail 141, and the first sliding block 142 is connected to the first camera unit 301. And one end of the first telescopic rod 143 is connected to the first sliding block 142, and the other end is fixedly connected to one end of the translation device 14. When the length of the first telescopic rod 143 changes, the first sliding block 142 translates along the first slide rail 141, which drives the first camera unit 301 to move horizontally, so that images of the goods from multiple angles can be collected to obtain more image data.

The lifting device 15 includes a second sliding rail 151, a second sliding block 152 and a second telescopic rod 153. The second sliding rail 151 is vertically arranged on the upper part of the inner side wall of the box 1, the second sliding block 152 is slidably mounted to the second sliding rail 151, and the second sliding block 152 is connected to the second camera unit 302. One end of the second telescopic rod 153 is connected to the second sliding block 152 and the other end is fixedly connected to one end of the lifting device 15. When the length of the second telescopic rod 153 changes, the second slider 152 moves up and down along the second slide rail 151, which drives the second camera unit 302 to move up and down, so that images of the goods from multiple angles can be collected to obtain more image data.

The first telescopic rod 143 and the second telescopic rod 153 can be electrically connected to the data processing unit 6 respectively, and the user can control the telescopic amount of the first telescopic rod 143 and the second telescopic rod 153 according to actual needs, and then adjust the lens angles and positions of the first camera unit 301 and the second camera unit 302. These adjustments may occur before the photographing process or during the photographing process.

In another example, the goods information collection device may further include a second lifting device (not shown in figures), which is arranged on the inner side wall of the box 1, and the translation device 14 is liftably mounted to the second lifting device. The first camera unit 301 is movably mounted to the first sliding block 142 of the translation device 14. The first camera unit 301 can be installed in the translation device 14 so that the first camera unit 301 can move horizontally and/or move up and down, which can take photos of goods from more angles and directions, and collect more image data of the goods.

In other examples, the goods information collection device, besides including all the technical features of example 1, may also include the translation device 14 or the lifting device 15 described above, and the translation device 14 or the lifting device 15 may be arranged on the inner side wall of the box 1.

The beneficial effect of this example is to provide a goods information collection device with the first camera unit and the second camera unit that can move horizontally and/or up and down during the shooting process to obtain a large number of photos of the same goods from more angles in a short time.

### Example 4

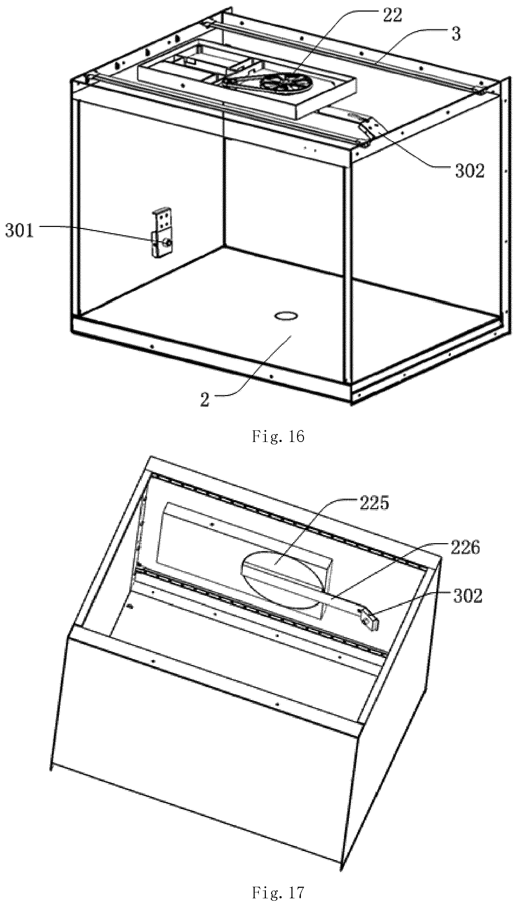

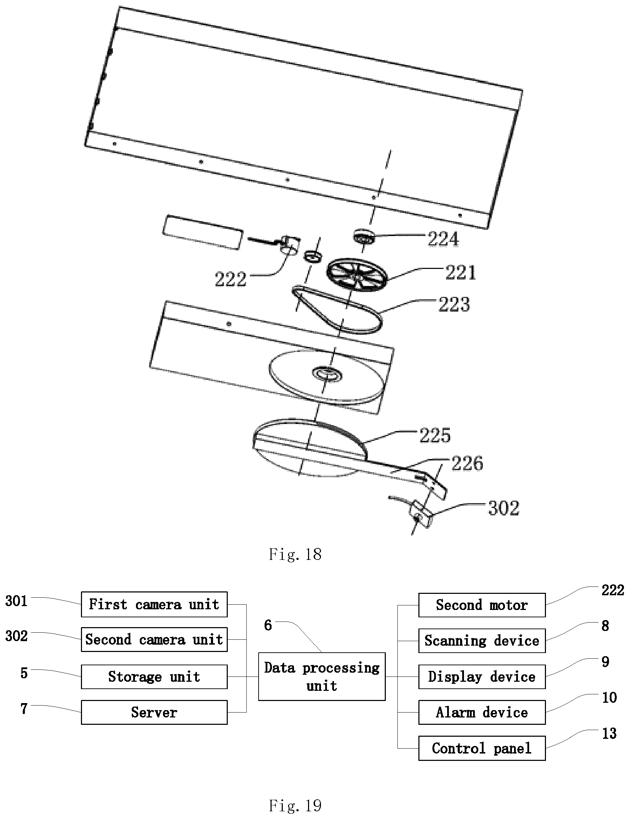

Referring to FIGS.16 to 19, this example provides a goods information collection device, which includes all the technical features of example 1. The difference between the two is that example 4 does not include the first rotating device 21, but includes a second rotating device 22, which is arranged on the inner top surface of the box 1. The second camera unit 302 is installed to the second rotating device 22 instead of being installed on the inner side wall of the box 1.

The structure of the second rotating device 22 is similar to the structure of the first rotating device 21, and the second rotating device 22 includes a second rotating wheel 221, a second motor 222 and a second circular conveyor belt 223. The second rotating wheel 221 is rotatably mounted to the inner top surface of the box 1 through a second bearing 224; the second motor 222 is fixed to the inner top surface of the box 1, and the second motor 222 includes a second rotor (not shown in figures). The central axis of the second rotor is parallel to the central axis of the second rotating wheel 221; the second circular conveyor belt 223 is tightly sleeved on the outer side wall of the second rotating wheel 221 and the second rotor, and the inner side wall of the second circular conveyor belt 223 is tangent to the outer side wall of the second rotating wheel 221 and the outer side wall of the second rotor.

In this example, it also includes a rotating plate 225 horizontally arranged on the top of the second rotating device 22. When the second motor 222 rotates, the second motor 222 drives the second circular conveyor belt 223 to rotate clockwise. Under the traction of the second circular conveyor belt 223, the second rotating wheel 221 also rotates clockwise. At this time, the bearing 224 of the second rotating wheel 221 drives the rotating plate 225 to rotate, so that the second camera unit 302 connected to the rotating plate 225 through a bracket 226 is rotated.

In this example, the carrier plate 2 and the goods are stationary, and the second rotating device 22 drives the second camera unit 302 to rotate on a horizontal plane, so as to photograph the goods on the carrier plate 2. It takes 3 to 90 seconds for the second rotating device 22 to rotate one circle at a uniform speed, and its technical effect is similar to that of example 1, and will not be repeated here.

In other examples, the goods information collection device, besides including all the technical features of example 1, may also include the second rotating device 22 described above. The second rotating device 22 is arranged on the inner top surface of the box 1, and the second camera unit 302 is installed to a second rotating device 22 instead of being installed on the inner side wall of the box 1. Under the joint action of the first rotating device 21 and the second rotating device 22, the first camera unit 301 and the second camera unit 302 facing the goods on the carrier plate 2, rotate relative to the goods, and perform fast shooting at the same time, and a large number of photos of the same goods from more angles can be obtained in a short time.

In the above examples, the first camera unit 301 and the second camera unit 302 are ordinary color cameras, which have a low cost, and the shooting speed of the two camera units is 20-30 frames per second. In the process of collecting information, it requires less time and is fast, which can save a lot of manpower and material resources, and can effectively improve the efficiency of goods information collection.

The beneficial effect of this example is to provide a goods information collection device where the relative viewing angle and relative direction between its image capturing unit and the goods can be adjusted during the shooting process, and the goods information collection device can photograph a large number of pictures of the same goods in different angles and different directions in a short time, which greatly improves the shooting efficiency and effectively saves labor and time costs.

The foregoing are only some examples of the disclosure which illustrate to those skilled in the art how to practice the disclosure. The examples are not intended to limit the scope of the disclosure. Those skilled in the art will appreciate that various modifications and adaptations can be made without departing from the principles of the disclosure, and such modifications and adaptations should be considered as within the scope of the disclosure.

## Claims

1. A goods information collection device, comprising:
a box;
a carrier plate disposed on an inner bottom surface of the box for placing goods;
an image capturing unit configured to collect at least one image of the goods, wherein the image includes a picture and/or a video;
a storage unit for storing the image of the goods; and
a data processing unit connected to the image capturing unit and the storage unit, respectively.

2. The goods information collection device according to claim 1, wherein
the image capturing unit includes:
a first camera unit including a first lens facing the goods on the carrier plate, the first camera unit being disposed on an inner side wall of the box; and/or
a second camera unit including a second lens facing the goods on the carrier plate, the second camera unit being disposed on an inner top surface of the box;
wherein the first camera unit and/or the second camera unit are electrically connected to the data processing unit.

3. The goods information collection device according to claim 2, wherein
an angle between a central axis of the first lens and a central axis of the carrier plate is 90 degrees; and/or,
an angle between a central axis of the second lens and the central axis of the carrier plate is 20 to 70 degrees.

4. The goods information collection device according to claim 2, further comprising
a translating device disposed on an inner side wall of the box;
a lifting device disposed on an inner side wall of the box; and/or,
wherein the first camera unit is mounted to a translation device and/or a lifting device;
the second camera unit is mounted to a translation device and/or a lifting device.

5. The goods information collection device according to claim 1, further comprising
a first rotating device disposed on the inner bottom surface of the box, the carrier plate being horizontally disposed on a top of the first rotating device; or,
a second rotating device disposed on an inner top surface of the box, a second camera unit being connected to the second rotating device through a connecting rod.

6. The goods information collection device according to claim 5, wherein
the first rotating device comprises:
a first rotating wheel rotatably mounted on the inner bottom surface of the box;
a first motor fixed to the inner bottom surface of the box, the first motor including a first rotor,
wherein a central axis of the first rotor is parallel to a central axis of the first rotating wheel; and
a first circular conveyor belt tightly sleeved on an outer side wall of the first rotating wheel and the first rotor.

7. The goods information collection device according to claim 5, wherein
the second rotating device comprises:
a second rotating wheel rotatably mounted on the inner top surface of the box;
a second motor fixed to the inner top surface of the box, the second motor including a second rotor, wherein a central axis of the second rotor is parallel to a central axis of the second rotating wheel; and
a second circular conveyor belt tightly sleeved on an outer side wall of the second rotating wheel and the second rotor.

8. The goods information collection device according to claim 1, further comprising:
a weighing plate disposed on the inner bottom surface of the box for placing goods; and
a weight sensor having a lower surface of one end connected to the inner bottom surface of the box, and an upper surface of another end connected to a lower surface of the weighing plate; wherein the weight sensor is coupled to the data processing unit.

9. The goods information collection device according to claim 1, further comprising:
a light source disposed on an inner top surface of the box.

10. The goods information collection device according to claim 1, wherein
the box comprises three or more box plates, and any one of the box plates is detachably connected to at least one other box plate.

11. The goods information collection device according to claim 10, wherein
each box plate comprises:
a plate body;
a buckle that protrudes from an edge of the plate body; and/or,
a bayonet penetrating at the edge of the plate body;
wherein the buckle of one box plate is detachably snapped into the bayonet of another box plate.

12. The goods information collection device according to claim 1, wherein the box comprises:
a door that is mounted, in an openable and closable manner, to a box plate of a side or top of the box; and/or
a transparent window embedded in a box plate of the box.

13. The goods information collection device according to claim 1, wherein
the data processing unit is used to calculate a size of the goods according to a size of the image of the goods.

14. The goods information collection device according to claim 1, wherein
the image capturing unit includes a first camera unit disposed on an inner side wall of the box; and
the first camera unit includes a first lens and an imaging plate, wherein the first lens faces the goods on the carrier plate, and a central axis of the first lens is perpendicular to the imaging plate;
the data processing unit includes:
a distance parameter input unit configured to record a horizontal distance between the first lens and the goods and a distance between the first lens and the imaging plate;
a goods image acquisition unit configured to acquire an image of the goods formed on the imaging plate;
an image size acquisition unit configured to acquire a size of the image of the goods; and
a goods size calculation unit configured to calculate a size of the goods according to the size of the image of the goods, a distance between the first lens and a front end of the goods, and the distance between the first lens and the imaging plate.

15. The goods information collection device according to claim 1, further comprising:
a server wired or wirelessly coupled to the data processing unit for acquiring an image of the goods and/or its size.

16. The goods information collection device according to claim 1, further comprising:
a scanning device coupled to the data processing unit; and/or,
a display device coupled to the data processing unit; and/or,
an alarm device coupled to the data processing unit.
